# EUROPÄISCHE PATENTSCHRIFT

(11) **EP 2 532 451 B1**
(45) Veröffentlichungstag und Bekanntmachung des Hinweises auf die Patenterteilung: **28.03.2018**
(21) Anmeldenummer: 11169138.2
(22) Anmeldetag: 08.06.2011
(51) Int. Cl.: B21C 9/00, B21C 43/02, B23D 79/12, B23Q 11/10

(54) **Verfahren und Vorrichtung zur Vermeidung von Reibmartensit beim Ziehschälen eines Drahts**
Method and device for avoiding formation of friction martensite when shaving a wire
Procédé et dispositif pour éviter la formation de martensite par friction lors de l'écroûtage d'un fil métallique

(43) Veröffentlichungstag der Anmeldung: 12.12.2012
(73) Patentinhaber: Air Liquide Deutschland GmbH, 40235 Düsseldorf (DE); L'AIR LIQUIDE, Société Anonyme pour l'Etude et l'Exploitation des Procédés Georges Claude, 75007 Paris (FR)
(72) Erfinder: Braun-Klabunde, Thomas, 41517 Grevenbroich (DE); Plorin, Dietrich, 29462 Wustrow (DE)
(74) Vertreter: Heine, Christian Klaus

(56) Entgegenhaltungen:
- EP-A1- 0 412 512
- EP-A2- 0 958 887
- WO-A2-03/022517
- DE-A1- 2 334 041
- JP-A- S62 236 618

## Beschreibung

Die vorliegende Erfindung betrifft ein Verfahren zum Kühlen und Bearbeiten eines Drahts und eine Ziehschälvorrichtung zur spanenden Bearbeitung des Drahts.

In Ziehschälvorrichtungen werden dünne Drähte mit hoher Oberflächenqualität hergestellt. Dabei kann das Ausgangsmaterial, welches Oberflächenfehler und geometrische Abweichungen aufweist, zunächst mit Hilfe einer Ziehscheibe durch einen oder mehrere Ziehsteine gezogen werden. Hierbei wird das Ausgangsmaterial plastisch verformt und weist nach dem Ziehstein einen kleineren Durchmesser als vor dem Ziehstein auf. Um die Oberflächenqualität zu verbessern, wird der Draht durch einen Schälstein gezogen, wobei die äußerste Schicht des Drahts durch spanende Bearbeitung abgetragen wird.

Die beim Schälen auftretenden Schneidkräfte erzeugen kurzzeitig eine so hohe Reibungswärme, die zu einer unerwünschten Gefügeveränderung auf der Drahtoberfläche führen kann. Auf der Drahtoberfläche kann sich insbesondere ein Reibmartensit ausbilden. Das Reibmartensit ist aufgrund seiner Härte nicht plastisch verformbar, weitere Drahtziehoperationen sind nicht möglich.

Stand der Technik ist es, den Draht und den Schälstein mit Wasser zu kühlen. Dabei ist die Kühlleistung des Wassers jedoch nicht ausreichend, um eine Reibmartensitbildung zu verhindern. Dies liegt darin begründet, dass das Kühlwasser kritische Punkte nicht erreicht. Kritische Punkte sind der Kontaktpunkt zwischen Schälstein und Draht und der Bereich des Schneidenfreiwinkels des Schälsteins in Ziehrichtung hinter dem Kontaktpunkt zwischen Schälstein und Draht, der auch Freischneidenbereich genannt wird.

Es ist daher bekannt, dass Reibmartensit nach dem Schälvorgang durch eine gezielte Wärmebehandlung, durch das sogenannte Lösungsglühen, vollständig aufzulösen. Dieses Lösungsglühen ist ein zusätzlicher, aufwendiger Arbeitsgang mit hohem Energieaufwand.

Die gattungsgemäße DE 23 34 041 betrifft ein Verfahren und eine Vorrichtung zur Endbehandlung der Oberfläche von Drähten, also das Ziehschälen und Ziehen von Drähten. Zweck dieser Schrift ist es, den Abtrag unerwünschter Oberflächenfehler von Drähten zu ermöglichen, während gleichzeitig deren physikalischen und mechanischen Eigenschaften verbessert werden. Ferner soll die Stabilität und Gleichmäßigkeit des Schälvorgangs und die Oberflächengüte mit geringen Toleranzen verbessert werden. Gemäß DE 23 34 041 wird der Draht vor dem spanenden Bearbeiten auf eine Temperatur oberhalb von 120 °C erwärmt. Aus der JP S62 236618 A ist eine Vorrichtung zum Ziehschälen eines Drahtes bekannt, bei der eine Kühlung des Drahts erfolgen kann.

Hiervon ausgehend liegt der vorliegenden Erfindung die Aufgabe zugrunde, die mit Bezug auf den Stand der Technik geschilderten Probleme zumindest teilweise zu lösen und insbesondere ein Verfahren und eine Vorrichtung anzugeben, die eine nachträgliche Wärmebehandlung überflüssig machen.

Diese Aufgaben werden gelöst mit einem Verfahren und einer Ziehschälvorrichtung gemäß den Merkmalen der unabhängigen Patentansprüche. Weitere vorteilhafte Ausgestaltungen der Erfindung sind in den jeweils abhängig formulierten Patentansprüchen angegeben.

Mit Freischneidenbereich ist der Bereich des Schneidenfreiwinkels des mindestens einen ersten Bearbeitungselements in Ziehrichtung hinter dem Kontaktpunkt zwischen Schälstein und Draht gemeint. Das Verfahren ist somit insbesondere geeignet zum Betreiben einer Ziehschälvorrichtung zur Herstellung von dünnem Draht mit hoher Oberflächenqualität. Der in dem Verfahren hergestellte Draht ist frei von Rissen, Fehlern und Reibmartensit und weist eine blanke Oberfläche auf. Durch den Einsatz von kalten Gasen zum Kühlen werden die Ziehschälvorrichtung sowie der Draht nicht verschmutzt. Das Gas kann mittels einer Absaugvorrichtung entfernt werden.

Der Draht wird in der Regel mit Hilfe einer Ziehscheibe durch die Ziehschälvorrichtung gefördert. Das erste Bearbeitungselement ist insbesondere ein Schälstein, an dem die oberste Schicht des Drahts abgeschält wird. Das Kühlgas wird bevorzugt mit Leitungen in die Ziehschälvorrichtung geführt und tritt durch eine oder mehrere Düse aus, die auf die Drahtoberfläche und/oder das erste Bearbeitungselement gerichtet ist. Insbesondere ist die Düse in den Freischneidenbereich zwischen Drahtoberfläche und erstem Bearbeitungselement gerichtet.

Das Kühlgas ist bevorzugt ein kälteverflüssigtes Gas unter Druck, welches bei Austritt aus der Düse ggf. den Aggregatszustand ändert. Somit wird erreicht, dass gasförmiges, flüssiges und/oder festes Kühlgas unter Druck und hoher Austrittsgeschwindigkeit tief in den Bereich des Kontaktpunkts zwischen erstem Bearbeitungselement und Draht gelangt. Durch die Verwendung eines Kühlgases mit einer Temperatur von bevorzugt unterhalb von 0 °C, insbesondere von unterhalb -50°C oder sogar -75°C wird ein kurzfristiges Ansteigen der Oberflächentemperatur des Drahts über die kritische Martensitbildungstemperatur vermieden. Der Draht ist somit ohne eine nachfolgende Wärmebehandlung in weiteren Ziehvorgängen plastisch verformbar. Auf die kosten- und energieintensive nachträgliche Wärmebehandlung kann verzichtet werden. Die so erzeugte Drahtoberfläche kann als blank und sauber bezeichnet werden. Durch eine Wärmebehandlung erzeugte Oxide auf der Oberfläche treten nicht auf. Der nächste Arbeitsschritt kann ohne entzundern und/oder Beizen der Oberfläche durchgeführt werden.

Um den Draht vor dem Schälen zu verjüngen, wird in einer Weiterbildung der Erfindung vorgeschlagen, dass der Draht durch mindestens ein weiteres Bearbeitungselement, insbesondere einen Ziehstein, zur plastischen Verformung des Drahts in Laufrichtung des Drahts vor dem ersten Bearbeitungselement innerhalb und/oder außerhalb der Ziehschälvorrichtung geführt wird. Bei der Anordnung des weiteren Bearbeitungselements in der der Draht beim Durchgang durch das weitere Bearbeitungselement beziehungsweise das weitere Bearbeitungselement durch das Kühlgas gekühlt werden.

Um den Draht nach dem Schälen zu verjüngen, wird erfindungsgemäß vorgeschlagen, dass der Draht durch mindestens ein zweites Bearbeitungselement zur plastischen Verformung, insbesondere einen Ziehstein, des Drahts in Laufrichtung des Drahts nach dem ersten Bearbeitungselement innerhalb der Ziehschälvorrichtung geführt wird. Bei dieser Anordnung des zweiten Bearbeitungselements innerhalb der Ziehschälvorrichtung kann beim Verjüngungsprozess des Drahts der Draht und/oder das zweite Bearbeitungselement mit dem Kühlgas gekühlt werden.

Ferner wird vorgeschlagen, dass auch das zweite Bearbeitungselement mit einem Kühlgas beaufschlagt wird.

Um eine effiziente Kühlung des Drahts und/oder des ersten Schälsteins zu erhalten, wird vorgeschlagen, dass die Düse zum Beaufschlagen mit Kühlgas auf den Kontaktpunkt und/oder den Freischneidenbereich zwischen Draht und Bearbeitungselement entgegen der Drahtlaufrichtung gerichtet ist.

Vorteilhaft umfasst das Kühlgas wenigstens ein Element der folgenden Gruppe, wenn es mit dem Draht und/oder dem ersten Bearbeitungselement in Kontakt kommt:
- festes Kohlendioxid (CO2-Schnee),
- flüssiger Stickstoff (N2),
- gasförmiges Kohlendioxid (CO2) mit einer Temperatur unterhalb von
   -10 °C,
- gasförmiger Stickstoff mit einer Temperatur unterhalb von - 50 °C

Einem weiteren Aspekt der Erfindung folgend wird eine Ziehschälvorrichtung, insbesondere eine Ziehschälvorrichtung zum spanenden Bearbeiten des Drahts gemäß dem Anspruch 5 vorgeschlagen. Die für das erfindungsgemäße Verfahren offenbarten Details und Vorteile lassen sich auf die erfindungsgemäße Vorrichtung übertragen und anwenden und umgekehrt.

Die Erfindung sowie das technische Umfeld werden nachfolgend anhand der Figur beispielhaft erläutert. Es ist darauf hinzuweisen, dass die Figur eine besonders bevorzugte Ausführungsvariante der Erfindung zeigt, diese jedoch nicht darauf beschränkt ist. Es zeigt schematisch:
Fig. 1: eine Ausführungsform einer nicht beanspruchten Ziehschälvorrichtung,
Fig. 2: eine weitere Ausfiihrungsform einer nicht beanspruchten Ziehschälvorrichtung.

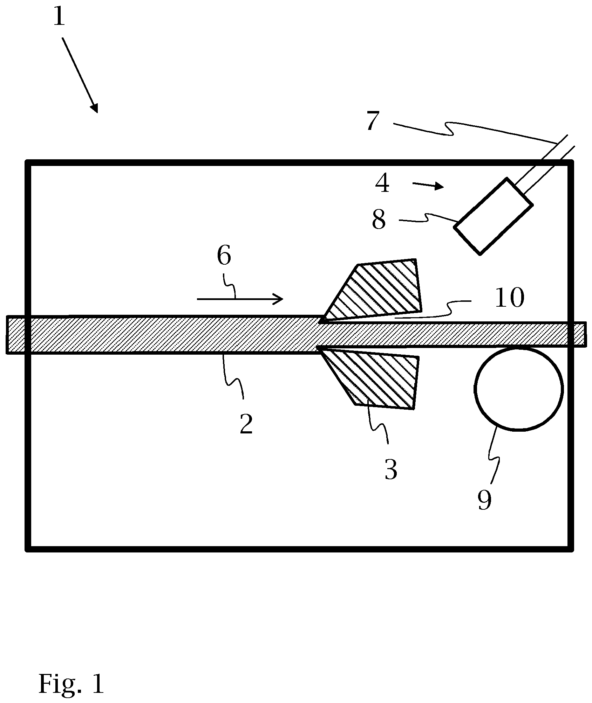

Die Figur 1 zeigt schematisch im Querschnitt eine Ziehschälvorrichtung. Die Ziehschälvorrichtung 1 umfasst einen Schälstein 3 als erstes Bearbeitungselement, sowie eine Ziehscheibe 9. Ferner umfasst die Ziehschälvorrichtung 1 eine Zuführung 4 mit einer Leitung 7 und einer Düse 8 zur Zuführung von einem Kühlgas.

Im Betrieb wird ein Draht 2 in Drahtlaufrichtung 6 von der Ziehscheibe 9 durch die Ziehschälvorrichtung 1 gezogen. Dabei durchtritt der Draht 2 den Schälstein 3, wo die oberste Schicht des Drahts 2 spanend abgeschält wird. Dadurch wird die Qualität der Oberfläche des Drahts 2 verbessert. Es wird ein Kühlgas durch die Leitung 7 und die Düse 8 in den Freischneidenbereich 10 zwischen dem Draht 2 und dem Schälstein 3 eingebracht. Das Kühlgas ist insbesondere flüssiges Kohlendioxid, das beim Austreten aus der Düse 8 seinen Aggregatszustand ändert und als Kohlenstoffdioxidschnee beziehungsweise Kohlenstoffdioxidgas auf den Draht 2 und den Schälstein 3 auftrifft oder flüssiger Stickstoff, der in flüssiger oder gasförmiger Form in den engen Spalt zwischen dem Draht 2 und dem Schälstein 3, den Freischniedenbereich 10, eintrifft.

Durch die Verwendung von Kühlgas werden der Draht 2 und das erste Schälstein 3 so stark gekühlt, dass eine Temperaturerhöhung der Oberfläche des Drahts während des Schälens auf eine Temperatur oberhalb einer kritischen Martensitbildungstemperatur nicht stattfindet. Daher kann auf eine kosten- und energieintensive, nachgelagerte Wärmebehandlung verzichtet werden.

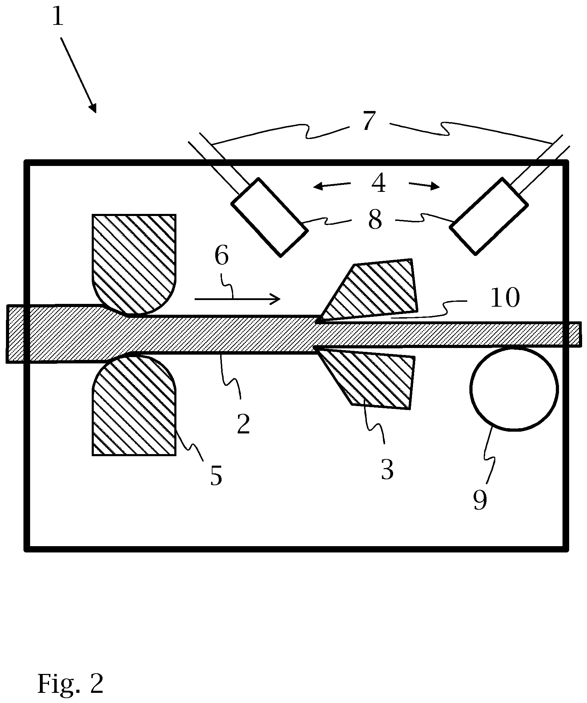

Die Figur 2 zeigt schematisch im Querschnitt eine weitere Ausführungsform einer Ziehschälvorrichtung. Die Ziehschälvorrichtung 1 umfasst einen Ziehstein 5 als weiteres Bearbeitungselement und einen Schälstein 3 als erstes Bearbeitungselement, sowie eine Ziehscheibe 9. Ferner umfasst die Ziehschälvorrichtung 1 zwei Zuführungen 4 mit jeweils einer Leitung 7 und einer Düse 8 zur Zuführung von einem Kühlgas.

Im Betrieb wird ein Draht 2 in Drahtlaufrichtung 6 von der Ziehscheibe 9 durch die Ziehschälvorrichtung 1 gezogen. Dabei durchtritt der Draht 2 zunächst den Ziehstein 5, wodurch der Draht 2 plastisch verformt und sein Querschnitt verjüngt wird. Anschließend durchtritt der Draht 2 den Schälstein 3, wo die oberste Schicht des Drahts 2 spanend abgeschält wird. Für weitere Erläuterungen sei auf die Ausführungen zur Figur 1 verwiesen.

## Patentansprüche

1. Verfahren zum Kühlen und Bearbeiten eines Drahts (2) mit einer Drahtoberfläche, umfassend zumindest die folgenden Schritte:
- Hineinführen des Drahts (2) in eine Ziehschälvorrichtung (1),
- Führen des Drahts durch mindestens einen ersten Schälstein (3) zur spanenden Bearbeitung der Drahtoberfläche,
- Beaufschlagen zumindest der Drahtoberfläche oder des ersten Schälsteines (3) in der Ziehschälvorrichtung (1) mit einem Kühlmittel und,
- Führen des Drahts (2) durch mindestens ein zweites Bearbeitungselement (5) zur plastischen Verformung des Drahts (2) in Drahtlaufrichtung (6) nach dem ersten Bearbeitungselement (2), **dadurch gekennzeichnet, dass**:
- das Kühlmittel ein Kühlgas ist,
- ein Kontaktpunkt zwischen dem mindestens einen ersten Schälstein (3) und dem Draht (2) und/oder ein Freischneidenbereich (10) des mindestens einen ersten Schälsteins (3) mit dem Kühlgas beaufschlagt wird, und
- das mindestens eine zweite Bearbeitungselement (5) innerhalb der Ziehschäleinrichtung (1) angeordnet ist.

2. Verfahren nach Anspruch 1, umfassend zumindest einen der folgenden Schritte:
- Führen des Drahts (2) durch mindestens ein weiteres Bearbeitungselement (5) zur plastischen Verformung des Drahts (2) in Drahtlaufrichtung (6) vor dem ersten Schälstein (3) innerhalb der Ziehschälvorrichtung (1),
- Führen des Drahts (2) durch mindestens ein weiteres Bearbeitungselement (5) zur plastischen Verformung des Drahts (2) in Drahtlaufrichtung (6) vor dem ersten Schälstein (3) außerhalb der Ziehschälvorrichtung (1),
- Beaufschlagen des zweiten, bzw. des weiteren Bearbeitungselements (5) mit einem Kühlgas.

3. Verfahren nach Anspruch 1 oder 2, wobei der Draht (2) in unmittelbarer Nähe des ersten Schälsteins (3) und das erste Schälstein (3) von einer Stelle in Drahtlaufrichtung (6) hinter dem ersten Bearbeitungselement (3) aus mit dem Kühlgas beaufschlagt werden.

4. Verfahren nach einem der vorhergehenden Ansprüche, wobei das Kühlgas wenigstens ein Element der folgenden Gruppe umfasst:
- festes Kohlendioxid (CO₂),
- flüssiger Stickstoff (N₂),
- gasförmiges Kohlendioxid (CO₂) mit einer Temperatur unterhalb von -10 °C,
- gasförmiger Stickstoff mit einer Temperatur unterhalb von -50°C

5. Ziehschälvorrichtung (1) zum spanenden Bearbeiten eines Drahts (2), umfassend mindestens einen ersten Schälstein (3), und eine Zuführung (4) für ein Kühlmittel, die so angeordnet und ausgerichtet ist, dass mindestens eines der folgenden Elemente:
- der Draht (2) und
- der erste Schälstein (3) im Betrieb mit dem Kühlmittel in der Ziehschälvorrichtung (1) beaufschlagbar ist, und wobei mindestens ein zweites Bearbeitungselement (5) zur plastischen Verformung in Drahtlaufrichtung (6) hinter dem ersten Bearbeitungselement (3) angeordnet ist, **dadurch gekennzeichnet, dass**:
- die Zuführung (4) für ein Kühlmittel eine Zuführung für ein Kühlgas ist, die so angeordnet und ausgerichtet ist, dass im Betrieb ein Kontaktpunkt zwischen dem mindestens einen ersten Schälstein (3) und dem Draht (2) und/ oder ein Freischneidenbereich (10) des mindestens einen ersten Schälsteins (3) mit dem Kühlgas beaufschlagt wird, und
- das mindestens eine zweite Bearbeitungselement (5) innerhalb der Ziehschäleinrichtung (1) angeordnet ist.

## Claims

1. A method for cooling and processing a wire (2) which has a wire surface, comprising at least the following steps:
- guiding the wire (2) into a draw-peeling apparatus (1),
- guiding the wire through at least one first peeling die (3) used for machining the wire surface,
- applying a cooling means at least to the wire surface, or to the first peeling die (3), in the draw-peeling device (1), and
- guiding the wire (2) through at least one second processing element (5) which is used for the plastic deformation of the wire (2) and which is arranged after the first processing element (2) in the wire running direction (6), **characterized in that**:
- the cooling means is a cooling gas,
- the cooling gas is applied to a contact point between the at least one first peeling die (3) and the wire (2), and/or a clearance cutting region (10) of the at least one first peeling die (3), and
- the at least one second processing element (5) is arranged inside the draw-peeling device (1).

2. The method according to claim 1, comprising at least one of the following steps:
- guiding the wire (2) through at least one further processing element (5) which is used for the plastic deformation of the wire (2) and which is arranged inside the draw-peeling device (1) before the first peeling die (3) in the wire running direction (6),
- guiding the wire (2) through at least one further processing element (5) which is used for the plastic deformation of the wire (2) and which is arranged outside of the draw-peeling device (1), before the first peeling die (3) in the wire running direction (6),
- applying a cooling gas to the second and/or further processing element (5).

3. The method according to claim 1 or 2, wherein the cooling gas is applied to the wire (2) in the immediate vicinity of the first peeling die (3), and to the first peeling die (3), from a location after the first processing element (3) in the wire running direction (6).

4. The method according to any one of the preceding claims, wherein the cooling gas comprises at least one element of the following group:
- solid carbon dioxide (CO₂),
- liquid nitrogen (N₂),
- gaseous carbon dioxide (CO₂) at a temperature below -10 °C,
- gaseous nitrogen at a temperature below - 50 °C.

5. A draw-peeling apparatus (1) for machining a wire (2), comprising at least one first peeling die (3) and one feed (4) for a cooling means, arranged and aligned in such a manner that the cooling means can be applied in the draw-peeling apparatus (1) during operation to at least one of the following elements:
- the wire (2), and
- the first peeling die (3),
and wherein
at least one second processing element (5) for plastic deformation is arranged after the first processing element (3) in the wire running direction (6),
**characterized in that**:
- the feed (4) for a cooling means is a feed for a cooling gas, which is arranged and aligned in such a manner that the cooling gas is applied during operation to a contact point between the at least one first peeling die (3) and the wire (2), and/or a clearance cutting region (10) of the at least one first peeling die (3), and
- the at least one second processing element (5) is arranged inside the draw-peeling device (1).

## Revendications

1. Procédé de refroidissement et de traitement d'un fil (2) ayant une surface, le procédé comprenant au moins les étapes suivantes visant à :
- introduire le fil (2) dans un dispositif de rasage (1),
- guider le fil à travers au moins une première pierre de rasage (3) pour traiter la surface du fil par enlèvement de copeaux,
- soumettre au moins la surface du fil ou la pierre de rasage (3) dans le dispositif de rasage (1) à un agent de refroidissement et,
- guider le fil (2) à travers au moins un deuxième élément de traitement (5) pour déformer plastiquement le fil (2) dans le sens (6) de défilement du fil après le premier élément de traitement (2), **caractérisé en ce que** :
- l'agent de refroidissement est un gaz de refroidissement,
- un point de contact entre l'au moins une première pierre de rasage (3) et le fil (2) et/ou une zone de dégagement par découpage (10) de l'au moins une première pierre de rasage (3) est soumis au gaz de refroidissement, et
- l'au moins un deuxième élément de traitement (5) est disposé à l'intérieur du dispositif de rasage (1).

2. Procédé selon la revendication 1, comprenant au moins l'une des étapes suivantes visant à :
- guider le fil (2) à travers au moins un autre élément de traitement (5) pour déformer plastiquement le fil (2) dans le sens (6) de défilement du fil avant la première pierre de rasage (3) à l'intérieur du dispositif de rasage (1),
- guider le fil (2) à travers au moins un autre élément de traitement (5) pour déformer plastiquement le fil (2) dans le sens (6) de défilement du fil avant la première pierre de rasage (3) à l'extérieur du dispositif de rasage (1),
- soumettre le deuxième ou l'autre élément de traitement (5) à un gaz de refroidissement.

3. Procédé selon la revendication 1 ou 2, dans lequel le fil (2), à proximité immédiate de la première pierre de rasage (3), et la première pierre de rasage (3), à partir d'une position en arrière du premier élément de traitement (3) dans le sens (6) de déplacement du fil, sont soumis au gaz de refroidissement.

4. Procédé selon l'une des revendications précédentes, dans lequel le gaz de refroidissement contient au moins un élément du groupe suivant :
- le dioxyde de carbone solide (CO₂),
- l'azote liquide (N₂),
- le dioxyde de carbone gazeux (CO₂) à une température inférieure à -10 °C,
- l'azote gazeux à une température inférieure à -50 °C.

5. Dispositif de rasage (1), destiné à traiter un fil (2) par enlèvement de copeaux, comprenant au moins une première pierre de rasage (3) et un dispositif (4) d'alimentation en agent de refroidissement qui est disposé et orienté de telle sorte qu'au moins un des éléments suivants :
- le fil (2) et
- la première pierre de rasage (3)
puisse être soumis en fonctionnement à l'agent de refroidissement dans le dispositif de rasage (1), au moins un deuxième élément de traitement (5) destiné à la déformation plastique étant disposé en arrière du premier élément de traitement (3) dans le sens (6) de défilement du fil, **caractérisé en ce que** :
- le dispositif (4) d'alimentation en agent de refroidissement est un dispositif d'alimentation en gaz de refroidissement qui est disposé et orienté de telle sorte que, en fonctionnement, un point de contact entre l'au moins une première pierre de rasage (3) et le fil (2) et/ou une zone de dégagement par découpage (10) de l'au moins une première pierre de rasage (3) soit soumis au gaz de refroidissement, et
- l'au moins un deuxième élément de traitement (5) est disposé à l'intérieur du dispositif de rasage (1).
